# EUROPEAN PATENT APPLICATION

(11) **EP 3 226 442 A1**
(43) Date of publication of application: **04.10.2017**
(21) Application number: 14902086.9
(22) Date of filing: 18.09.2014
(51) Int. Cl.: H04B 10/524

(54) **DESIGN AND CONFIGURATION OF A SYSTEM FOR THE BIDIRECTIONAL COMMUNICATION OF DIGITAL DATA THROUGH THE VISIBLE LIGHT SPECTRUM, IN A NON-CONFINED MEDIUM**

(71) Applicant: SISOFT DE MEXICO, S.A. DE C.V., CP. 3020, Ciudad de Mexico (MX)
(72) Inventor: CAMPOS FENTANES, Arturo, Del. Benito Juàrez, D.F. 03020 (MX)
(74) Representative: Martin Santos, Victoria Sofia
(86) International application number: PCT/MX2014/000143
(87) International publication number: WO 2016/043573

(57) **Abstract**

The invention discloses a system for the bidirectional communication of digital data through the visible light spectrum, in an unconfined medium which uses two devices for supplying electrical current, regulating the voltage, converting the negative voltage, amplifying the signal, transmitting the signal to an LED, receiving the signal, finally converting the signal and transmitting the digital signal wirelessly to an end device, as specified in the description, and which, as a result of its characteristics of innocuity, privacy, low cost, higher power, savings in energy, interactivity, duality of use and extension of useful life of the devices, has a wide range of use in various fields in the industry such as: health, medicine, the military, education, training, tourism, gadget production, to name just a few.

This invention solves the problems of connection, privacy and frequency amplitude of data transmission that are found in existing connections such as Bluetooth and Wi-Fi.

## Description

### BACKGROUND

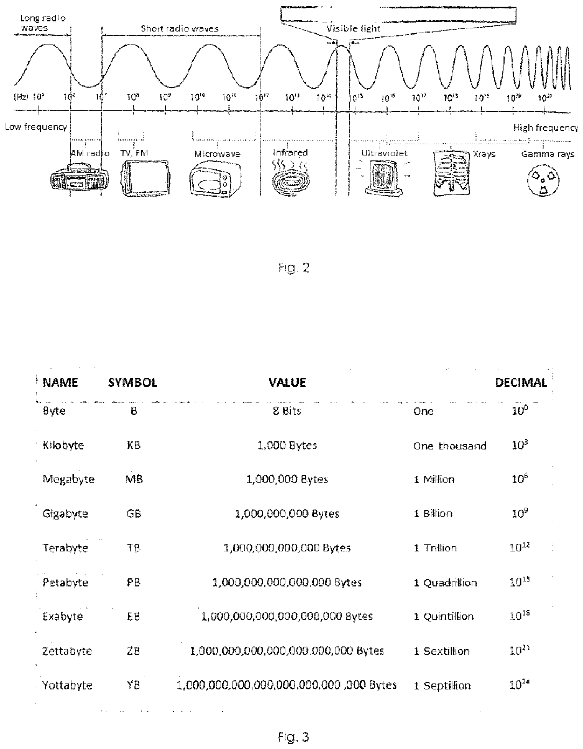

The transmission of data, audio, video and internet through light is based on a mathematical assumption of James Clerk Maxwell in his theory that shows that light represents a small region of the spectrum of electromagnetic waves (see fig. 2), which gave rise to the theory that it is possible to use a digital system that translates the classical binary language of zeros and ones into light pulses (off or on) through LED light capable of turning itself on and off millions of times per second.

Hence the idea of promoting a high-speed wireless optical system which solves and overcomes today's limitations of the Wi-Fi (Wireless Fidelity) radio spectrum, also called WLAN (Wireless Lan).

Wi-Fi Alliance has been a magnificent technology that has been providing multiple benefits and has come to replace wired networks due to its connection and usability practicality, as the absence of cables and its access from multiple devices of different characteristics has prevented for users the problems related to the search and acquisition of the cable suitable for its connection. However, such usability is being limited since the radio spectrum used for radio communication is being gradually saturated due to the massification of users, that is to say, overdemand, which threatens its availability and is being reflected in its performance, with increasingly slower connections, which has led to opt for new technologies.

Wi-Fi Alliance enjoys international acceptance due to its availability of bandwidth up to a 2.4-GHz frequency and speeds of up to 300 megabits per second (Mbps) range. However, its quality has gradually been flawed by the very saturation of the Wi-Fi network and by new wireless technologies, such as Bluetooth, that also work at a frequency of 2.4 GHz and generate interferences with Wi-Fi technology.

Another problem facing Wi-Fi is insecurity, since the networks are vulnerable to hacking, making the information that is transited through the networks completely unprotected.

The speed compared to a wired connection is lower due to the interference and signal losses that the environment can generate.

Similarly, the strength of the connection is affected by physical agents that are around us, such as: electromagnetic noise from electrical appliances, walls, ceilings, trees, streams, mountains, rain, etc. That is the reason why Wi-Fi is a good choice for connections from a distance that does not exceed 100 meters, a fact that limits its range of action.

In addition, recent studies have affirmed that electromagnetic waves affect human health, causing diseases by the exposure to the radiofrequency emitted by the Wi-Fi devices, antennas and networks, and although these discoveries are at an early stage, we are already beginning to receive warnings that exposure to Wi-Fi is harmful to health.

Thus, in order to solve the problems that Wi-Fi cannot address, studying the possibility of alternate wireless connections for the transmission of information has begun. The spectrum of light emitted by the LEDs is found to be a good means for the wireless transmission of data since it is thousands of times larger than the radio frequency spectrum, allowing to raise data transmission rates to gigabit per second.

The first indications of the existence of this technology at the media level appeared in 2008, when researchers at Boston University's College of Engineering commented on the advances of the "idea" and reported that, just as in its own institute, others were experimenting around the concept of sending data through light.

Moreover, in July 2011, the German physicist Harald Haas, a scientist from the University of Edinburgh, recorded himself talking about the "feasibility" of transmitting the Internet and data through electricity by carrying the signal through the light emitted by LED bulbs to various equipment.

In August 2011, the worldwide launch of this technology was made by TED (Technology Entertainment and Design) in Edinburgh.

And in October 2011, several companies and industrial groups came together under the name of Li- Fi Consortium with the aim of joining forces and capital to develop Li-Fi. Since then, several countries such as China, the United States and Mexico have begun research on this medium of information transport and have thus begun to experiment with the development of protocols for a wireless optical data transmission system with a high-speed binary code flow.

### DETAILED DESCRIPTION

Light is required as the part of the electromagnetic spectrum that we can see, that is to say, a set of electromagnetic waves composed of photons (energized particles) whose frequency and energy determine the wavelength of the color that can be perceived by the human eye. These electromagnetic waves are also used in the field of communications, in the form of radio or microwave bands, using physical media to propagate through the air.

Our method is based on optical communication through the spectrum of visible light emitted by the light emitting diode (LED), which is the means of transmission of the signal and which uses the system of binary language to encode the information.

The binary system is a digital format for communication between electronic devices, which uses the fast pulses of light (1: on, 0: off) to transmit data.

Depending on the type of light or its blends of white, red, green and blue LEDs and their power of luminosity (brightness), the transmission frequency can be altered since the color is directly related to the intensity of lumens, which makes the light spectrum larger or smaller.

The great advantages of this technology compared to any other wireless technology are its characteristics of:
Privacy - Being a point-to-point communication, there is no other frequency to protect, and as light cannot cross walls, strangers cannot steal the signal.
Low cost - It does not require expensive wiring, for tracks and calibers, which directly translates into a substantial saving in wiring and in installations.
Great speed - It uses such a broad bandwidth that it cannot be saturated, thus allowing information to flow at high speeds.
Duality of use - At the same time that the light is used to illuminate, the spectrum of that beam of light is used to convey information.
Energy saving - Because of its low energy consumption, the simple use of LED (Light Emitting Diode) lighting generates energy savings of up to 90%.
Safety - LED light does not emit ultraviolet rays or infrared rays, which avoids risks both in human health and in the health of flora and fauna. In addition, as it does not work through radiofrequency, it does not emit radiation.
Ecology - LED lighting allows reducing the emission of heat in addition to not using any toxic elements.

### Disadvantages

As it cannot cross walls, it cannot be used outside the room where it is installed. Being so recent, problems of compatibility and use arise, since no current device has an integrated light receiver.

It does not work under direct sunlight, and since encoding is based on the frequency of the LED light, any light interference may cause data loss or signal loss.

### SYSTEM OPERATION

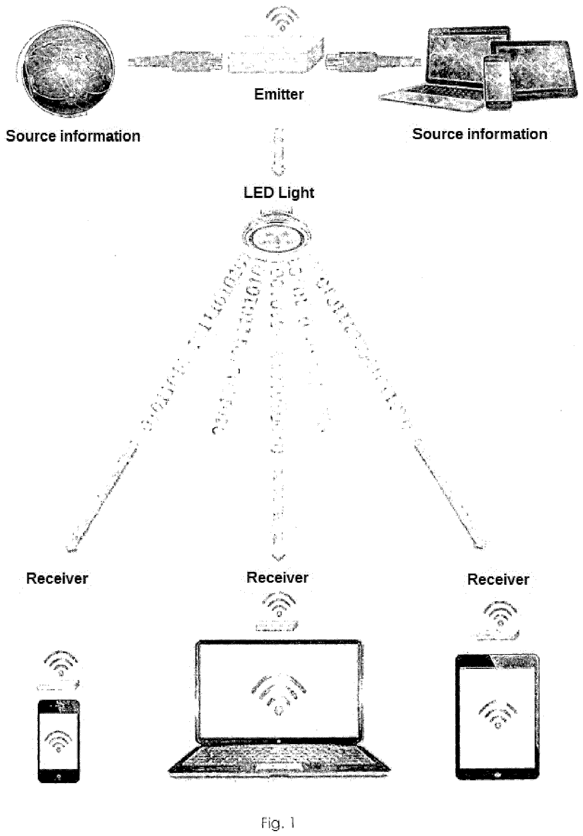

The system takes the signal from any digital signal generator that will function as the input device: multimedia music player, smart phone, Internet or computer; and through a Transmitter Driver sends the signal to an LED spotlight, which interprets the signal and sends it wirelessly through its pulses of light upon power-up and shutdown at an exorbitant speed, up to 1 Petabyte per second (1 PB/s), See Fig. 3, to the Receiver Driver in charge of receiving the signal and sending it to an output device: multimedia music player, smart phone, Internet or computer. See Fig. 1.

### TECHNICAL FIELD

The Bidirectional Communication System of digital data through the visible light spectrum, in an unconfined environment, pertains to the technical field of Technology and Telecommunications.

### APPLICATION

The field of application of data transmission based on optical communication by the visible light spectrum emitted by the Light Emitting Diode (LED) is immense, but speaking specifically of audio signal transmission, it can be easily incorporated into fields such as:
Telecommunications - Acceleration of the transmission and reception of hypertexts, for example: faster Internet.
Entertainment - Music stores, interactive museums, airplanes, buses, concert halls, auditoriums, production houses.
Tourism - Information broadcast on tourist sites, recreational parks, theme parks, tour vehicles, museums, monuments, zoos, art galleries.
Health - Voice dictators for medical transcription, control of areas containing medical equipment such as ultrasonographs and magnetic resonators.
Military - Emission of targeted and secure information.
Education - Conferences, distance education, interactive education, playful sounds, teaching in operating rooms.
Production of gadgets - Production of audio transmission devices (speakers, headphones, stereos, home theater and more).

### DESCRIPTION OF THE FIGURES

Figure 1, shows the transmission flow of the digital signal.
Figure 2 schematizes the Electromagnetic Spectrum and the frequency (Hz) to which they operate, identifying the range in which Visible Light operates.
Figure 3 is a table of equivalencies of Bits according to the International System of Units.

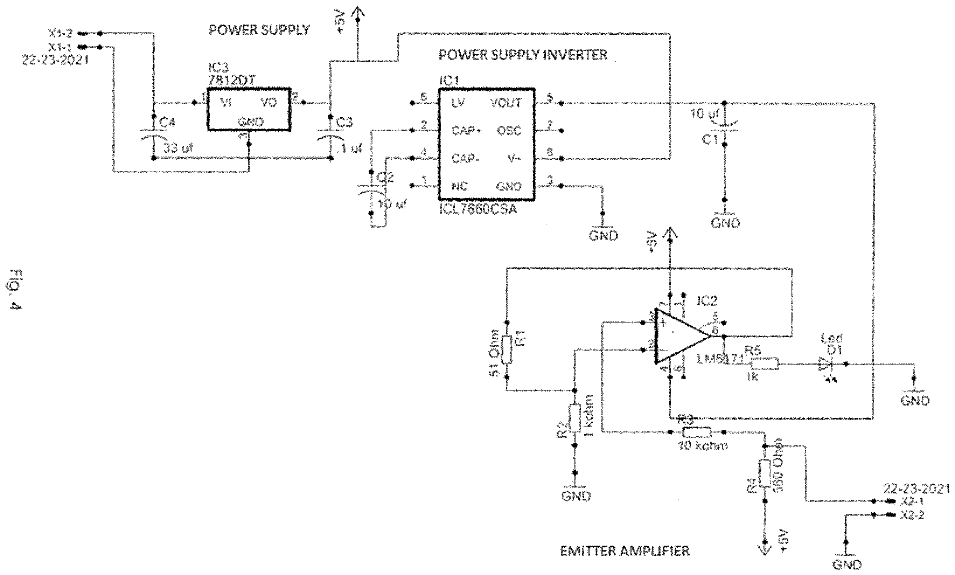

Figure 4 is a diagram of the video transmission operation.

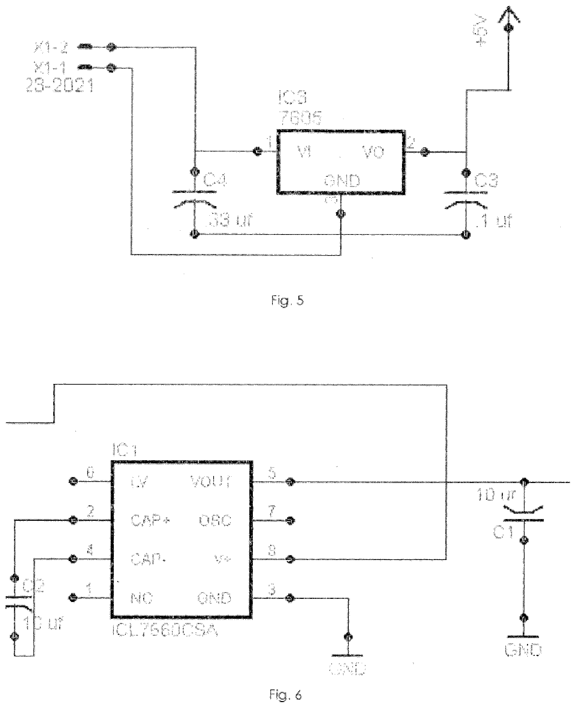

Figure 5 is a cross-section of the voltage regulating step with 5V input of the video signal Transmitter Driver.
Figure 6 shows the negative voltage power generation step of the video signal Transmitter Driver.

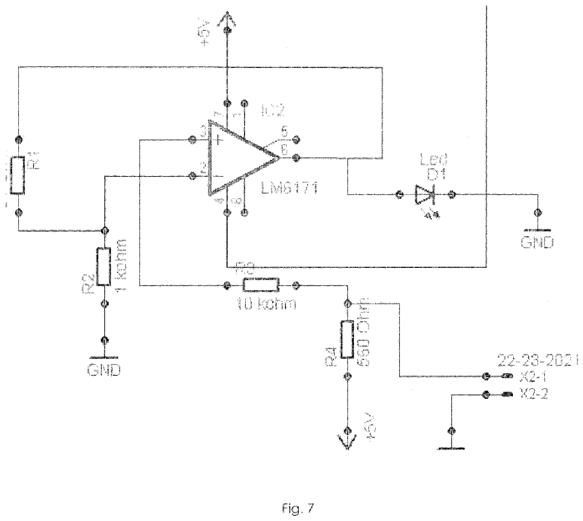

Figure 7 shows the signal amplification step of the video signal Transmitter Driver.

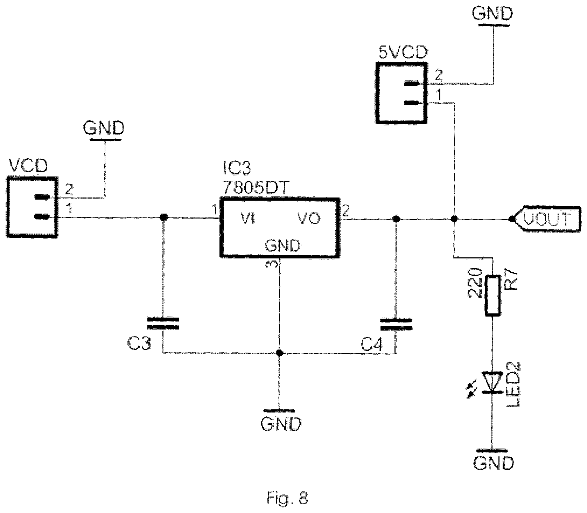

Figure 8 is a cross-section of the voltage regulating step with 5V input of the video signal Receiver Driver. The block consists of the voltage regulator 7805, which regulates the voltage to 5V, passes through C3 and C4 which are 1 pf capacitors to filter the signal, and an indicator through the R7 of 220 Ohms and its LED indicator.

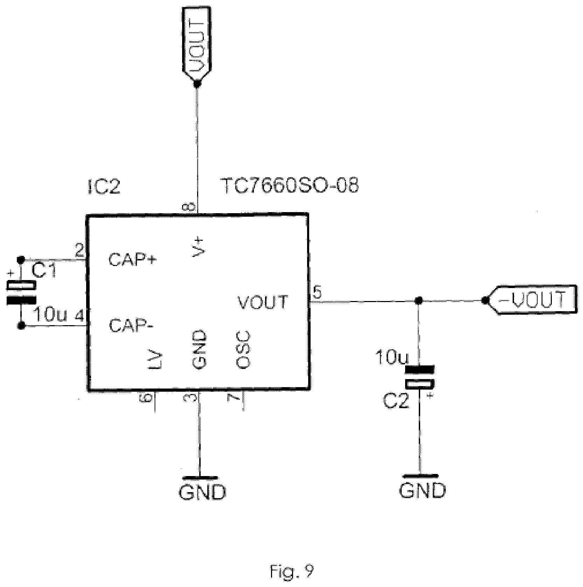

Figure 9 is a cross-section of the negative voltage power generation step of the video signal Receiver Driver. The block consists of the TC7660 IC, which inverts the input voltage to a negative voltage, C1 is the reference of the same circuit and C2 is used to filter the output voltage.

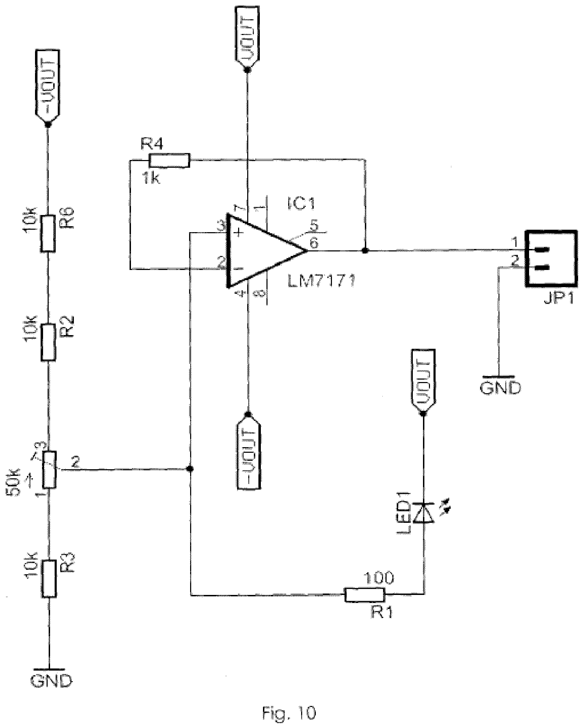

Figure 10 is a cross-section of the receiving, amplifying and sending step of signal from the video signal Receiver Driver. This block consists merely of the OPAM LM7171, which is a video amplifier and is responsible for receiving the signal through the LED 1 (Photodiode SFH213) with a R1 of 100 which goes to the non-inverter input, the OPAM having an amplification controlled by the arrangement of resistances of R2, R3, R4 and R6.

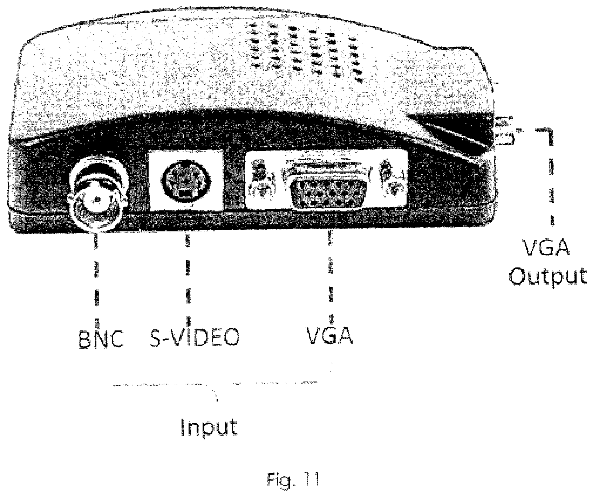

Figure 11 shows the BNC (Bayonet Neill-Concelman) converter to VGA (Video Graphics Array) with resolution up to FULL HD, from the video signal Receiver Driver to be displayed on a PC LCD monitor.

## Claims

1. A Bidirectional Communication System of digital data through the visible light spectrum, in an unconfined environment, integrates two devices to achieve the wireless transmission of digital data.
A Transmitter Driver, LED light and Receiver Driver that together allow: feeding electric current, regulating the voltage, converting the negative voltage, amplifying the signal, transmitting the signal to an LED, receiving the signal and finally converting the signal and transmitting the digital signal.
Based on the aforementioned, and having described the invention as above, I claim as proprietary:
1) A Bidirectional Communication System of digital data through the visible light spectrum, in an unconfined medium of any shape, size and composition, **characterized in that** it contains a Transmitter Driver and a Receiver Driver.
2) The Transmitter Driver according to Claim 1, **characterized in that** it comprises:
a) A voltage regulating module (See Fig. 5), designed to allow an input of a minimum of 7V and a maximum of 25V to give an output voltage of 5V, which, together with the capacitors, will set the output at 5V and filter it, consisting of:
i) 1 Integrated Circuit (IC) = LM7805
ii) 1 Capacitor = 0.33uF
iii) 1 Capacitor = 0.1uF
b) A negative voltage converter module (See Fig. 6), designed to provide a negative current when there is a positive supply of +1.5V to +12V, using the capacitors CI and C2 to set the switching frequency, consisting of:
i) 2 Capacitors = 10uF
ii) 1 Negative voltage converter (IC) = ICL7660
c) A high-speed video signal amplification module (See Fig. 7), which uses an OPAM (Operational Amplifier) for video distribution, at the output of pin 6 and which uses an LED diode to send the video signal to the receiver of the circuits R3 and R4, to establish the coupling resistance that goes to the video input and R2 and R1 to limit the current entering the LED, consisting of:
l) 1 Resistance = 51 Ohm (Ω)
ii) 1 Resistance = 1 K Ohm (Ω)
iii) 1 Resistance = 560 Ohm (Ω)
iv) 1 ultra bright blue LED.
3) Driver Receiver according to Claim 1, **characterized in that** it comprises:
a) A voltage regulation module (See Fig. 8), designed to provide current and voltage to the video receiver circuit, with an output of approximately 5 volts DC (Vdc), consisting of:
i) 2 Capacitors = 1pF
ii) 1 Resistance = 220 Ohm (Ω)
iii) 1 Chip LED indicator
iv) 1 Voltage regulator (IC) 7805 of 5V
b) A voltage inversion module (See Fig. 9), designed to change the positive 5 volts DC (Vdc) to negative 5 volts DC (Vdc), that is to say, from +5 Vdc to -5 Vdc., which are needed to power the operational amplifier, since its data sheet specifies that it needs a minimum of +-5 Vdc for its operation, consisting of:
i) 2 Capacitors = 10uF
ii) 1 Voltage converter (IC) TC7660
c) A signal amplification module (see Fig. 10), designed to receive the data from the Transmitter, amplifying the signal, then passing it through a BNC signal conversion step (Bayonet Neill-Concelman) to VGA (Graphics Array) for later viewing on the LCD (Liquid Crystal Display) display, HDMI (High-Definition Multi-media Interface) display or any monitor, consisting of:
i) 3 Resistors = 10K Ohm (Ω)
ii) 1 Resistance = 1 K Ohm (Ω)
iii) 1 Resistance = 100 Ohm (Ω)
iv) 1 SFH213 Photodiode.
